# EUROPÄISCHE PATENTSCHRIFT

(11) **EP 1 398 465 B1**
(45) Veröffentlichungstag und Bekanntmachung des Hinweises auf die Patenterteilung: **18.05.2005**
(21) Anmeldenummer: 02020411.1
(22) Anmeldetag: 10.09.2002
(51) Int. Cl.: F01D 21/04, F01D 9/02

(54) **Turbolader und Rotorgehäuse hierfür**
Turbocharger with rotor casing
Turbocompresseur avec carter du rotor

(43) Veröffentlichungstag der Anmeldung: 17.03.2004
(73) Patentinhaber: BorgWarner Inc., Auburn Hills, MI 48326-2872 (US)
(72) Erfinder: Böning, Ralf, 67829 Calbach, RLP, Bad Kreuznach (DE)
(74) Vertreter: Holmes, Miles

(56) Entgegenhaltungen:
- EP-A- 0 186 389
- US-A- 4 482 304
- US-A- 4 565 505
- US-A- 5 094 587

## Beschreibung

### Gebiet der Erfindung

Die vorliegende Erfindung bezieht sich auf einen Turbolader mit einer Rotorwelle, welche eine Rotationsachse definiert, einem Turbinengehäuse mit mindestens einem Zufuhrkanal für Abgas, in welches Turbinengehäuse ein Ende der Rotorwelle ragt, und in welchem mindestens ein Turbinenrotor an dieser Rotorwelle befestigt und so in einer vorbestimmten ersten, zur Rotationsachse senkrechten Ebene innerhalb eines ersten Rotorraumes drehbar gelagert ist und dessen Peripherie das Abgas zuführbar ist. Ferner weist der Turbolader ein Kompressorgehäuse mit mindestens einem Zuführkanal für Luft auf, in welches das andere Ende der Rotorwelle ragt, an dem wenigstens ein Kompressorrotor in einer vorbestimmten zweiten, zur Rotationsachse senkrechten Ebene innerhalb eines zweiten Rotorraumes befestigt ist und dessen Peripherie die Luft zuführbar ist.

### Hintergrund der Erfindung

Die obigen Merkmale entsprechen praktisch allen am Markt befindlichen Turboladern wie etwa nach den US-A-4,482,304; 4,565,505 oder 5,094,587 sowie nach der EP-A-0 186 389. Bei solchen Turboladern läuft das Turbinenrad - und über die Rotorwelle somit auch das Kompressorrad - mit relativ hohen Tourenzahlen, die etwa 20 000 Umdrehungen/min erreichen können. Dies bedeutet natürlich eine enorme Belastung der Rotoren durch die dabei auftretenden Fliehkräfte und dies noch zusätzlich unter thermisch extremen Bedingungen. Beim Turbinenrad kommt auch noch die korrosive Belastung durch das Abgas hinzu.

Es ist daher klar, daß im Falle einer Materialermüdung, eines Materialfehlers od.dgl. die Fliehkräfte einen solchen Rotor - und insbesondere den auch durch das Abgas belasteten Turbinenrotor - auseinanderreißen können. Deshalb hat man in der Vergangenheit die entsprechenden Gehäuse sehr dickwandig ausgeführt, um ein Durchschlagen von Rotorstücken durch die bei den oben genannten Dokumenten dem Rotor radial gegenüberliegende Wand des Zulaufkanals - und damit weitere Schäden - zu verhindern. Eine weitere bekannte Maßnahme war es, die Gehäuse mit einem schützenden Blechmantel zu umgeben, um so eine Berstsicherheit zu gewährleisten.

### Kurzfassung der Erfindung

Der Erfindung liegt die Aufgabe zugrunde, einen Berstschutz auf einfache Weise zu erreichen, ohne zusätzliche Maßnahmen und/oder dicke Gehäusewandungen vorsehen zu müssen, die den Turbolader gewichtsmäßig belasten und die Herstellung verteuern.

Diese Aufgabe wird erfindungsgemäß durch dei Kennzeichnenden Merkmale des Anspruches 1 gelöst. Durch die schräge Kanalwand wird im Falle des Berstens eines Rotors die Flugbahn von Rotorteilen abgelenkt, wobei ein Teil der solchen Teilen innewohnenden Energie abgebaut wird, denn durch die Schräge der zum Rotorraum führenden Kanalwand entsteht eine axiale Kraftkomponente, d.h. die Wucht des berstenden Teiles wird in eine axiale und radiale Kraftkomponente zerlegt. Gleichzeitig führt die Schräge der Wand eine weitere Dämpfung der Kraft durch Reibung herbei. Damit kann die verbleibende Restenergie leicht am Außenmantel des jeweiligen Gehäuses abgefangen werden, ohne das Gehäuse zu durchschlagen. Daher können durch die Erfindung solche Gehäuse dünner ausgebildet werden und benötigen keine zusätzlichen Berstschutzmaßnahmen.

Es wurde oben bereits gesagt, daß besonders der Turbinenrotor, einer Belastung unterworfen ist, weil er eben zusätzlich einer korrosiven Belastung ausgesetzt ist. Deshalb ist es bevorzugt, wenn es wenigstens der Zufuhrkanal für Abgas ist, welcher die schräge Kanalwand aufweist.

Um eine wirksame Energievernichtung an Berststücken zu erreichen, ohne die Gehäusewand zu sehr zu belasten, ist es vorteilhaft, wenn die schräge Kanalwand zur Drehachse einen Winkel von mindestens 45° einnimmt, vorzugsweise mindestens 60°. In der Praxis kann der Winkel - je nach Größe des Gehäuses - auch steiler sein, beispielsweise 75° erreichen.

### Kurzfassung der Beschreibung

Weitere Einzelheiten der Erfindung ergeben sich aus der nachfolgenden Beschreibung eines in der Zeichnung schematisch dargestellten bevorzugten Ausführungsbeispieles. Es zeigen:
Fig. 1 zeigt einen Turbolader der bisherigen Bauart in Perspektivansicht, teilweise im Schnitt, und
Fig. 2 einen Axialschnitt durch ein erfindungsgemäß ausgebildetes Gehäuse für einen Turbolader nach Fig. 1.

### Detaillierte Beschreibung der Zeichnungen

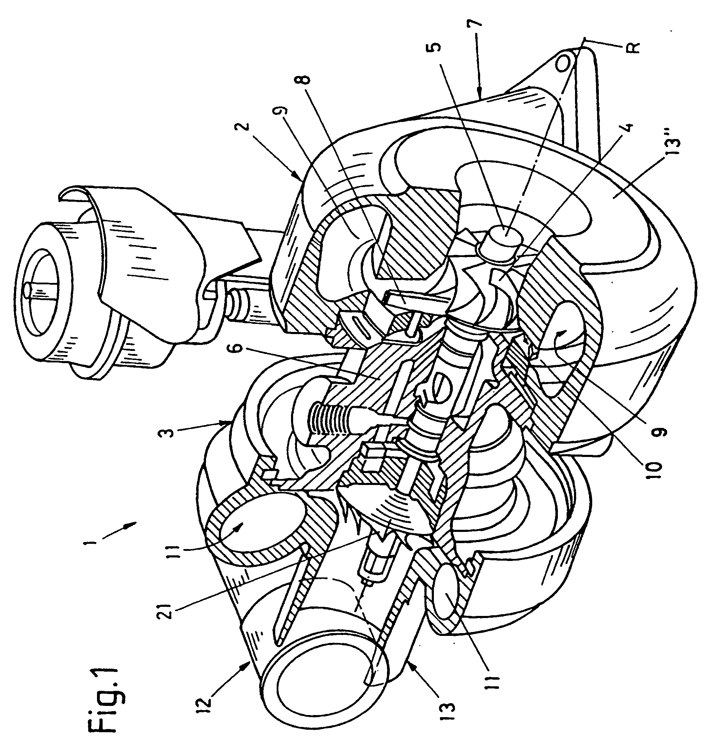

Gemäß Fig. 1 weist ein Turbolader 1 in üblicher Weise einen Turbinengehäuseteil 2 und einen damit verbundenen Kompressorgehäuseteil 3 auf, die entlang einer Rotationsachse R angeordnet sind. Der Turbinengehäuseteil 2 ist teilweise im Schnitt gezeigt, so daß der an der Achse R gelegene Turbinenrotor 4 sichtbar ist, der am einen Ende einer Rotorwelle 5 befestigt ist, welche in einem Gehäusemittelteil 6 gelagert ist. Das Turbinengehäuse 2 weist einen Zufuhrstutzen 7 für Abgas auf, der in einen etwa ringförmigen Zufuhrkanal 9 für Abgas mündet bzw. sich in diesem fortsetzt, um dem Turbinenrotor 4 Abgas aus einem Verbrennungsmotor zuzuführen. Die Zufuhr erfolgt bei der dargestellten Ausführung über die Schaufeln 8 eines an sich bekannten (und daher hier nicht im einzelnen beschriebenen) Leitgitters variabler Geometrie, die über in einem Schaufellagerring 10 gelagerte Verstellwellen hinsichtlich ihrer Lage (mehr radial zum Rotor 4 oder mehr tangential) einstellbar sind. Die Lage dieser Schaufeln 8 steuert die Zufuhrmenge an Abgas zum Turbinenrotor 4, doch ist aus der Literatur bekannt, daß diese Zufuhrmenge auch durch andere Gassteuereinrichtungen, wie die Ableitung des Abgases über einen am Turbinengehäuse vorbeiführenden Nebenschluß über ein entsprechendes Ventil, geregelt werden kann. Es versteht sich, daß auch mehr als ein Zufuhrkanal 9 vorgesehen sein kann, insbesondere wenn etwa mehrere Turbinenrotoren an der Welle 5 befestigt sein sollten.

Auf diese Weise wird über den Turbinenrotor 4 ein auf derselben Rotorwelle 5, und zwar an deren anderen Ende, sitzender Kompressorrotor 21 angetrieben. Dieser Kompressorrotor saugt Luft über einen ihn umgebenden Zufuhrkanal 11 und einen daran angeschlossenen Zufuhrstutzen 12 an, verdichtet sie und bläst sie durch einen Axialstutzen 13' aus. In ähnlicher Weise besitzt auch das Turbinengehäuse 2 einen Axialstutzen 13".

Aus Fig. 1 ist auch ersichtlich, daß das jeweilige Gehäuse 2 bzw. 3 einen Raum freiläßt, in dem sich der jeweilige Rotor 4 bzw. 21 drehen kann. Dieser Raum ist derart angeordnet, daß der jeweilige Rotor 4 bzw. 21 das jeweilige Gas (Abgas bzw. Luft) über seine Peripherie erhält, in deren Bereich die jeweiligen Zufuhrkanäle 9 bzw. 11 angeordnet sind. Nun wurde bereits gesagt, daß die an sich mit der Belastung des Verbrennungsmotors ändernden Drehzahlen der beiden Rotoren 4, 21 sehr hohe Werte erreichen können, beispielsweise von etwa 20 000/min. Daher ist die durch die Fliehkräfte auf die Rotoren 4, 21 wirkende Berstbelastung enorm. Herkömmliche Gehäuse für Turbolader müssen deshalb stark überdimensionierte Wandstärken aufweisen, um ein Durchschlagen von Rotorstücken durch die Gehäusewand beim Bersten zu verhindern.

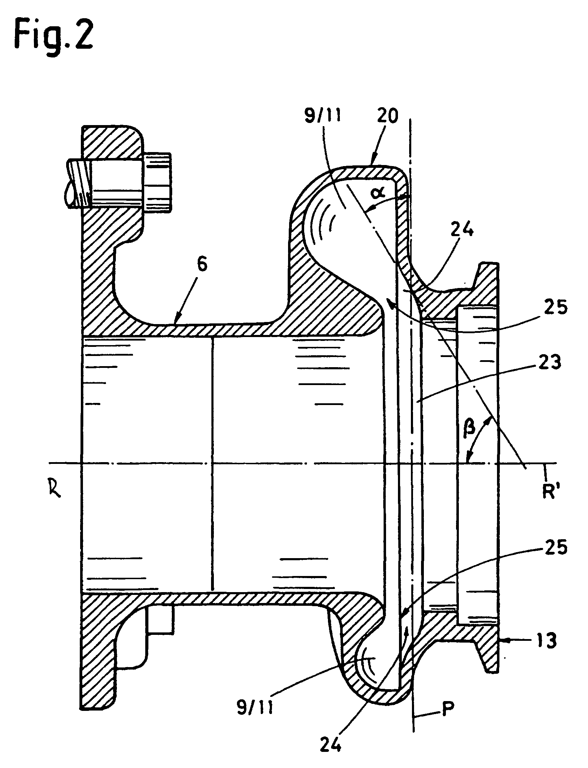

An Hand der Fig. 2 wird nun ein Rotorgehäuse 20 gezeigt, das beispielsweise (und bevorzugt) an Stelle des Gehäuses 2 der Fig. 1, gegebenenfalls aber in ähnlicher Form auch für das Gehäuse 3, verwendet werden soll, um den in Fig. 1 gezeigten Turbolader zu einem erfindungsgemäßen Turbolader zu machen. Dieses Gehäuse 20 erstreckt sich entlang einer Längsachse R', die auch etwa der Rotationsachse R nach Fig. 1 entspricht. Eine dazu senkrecht verlaufende Mittelebene P entspricht der Mittelebene desjenigen Rotors (4 bzw. 21), der in dieses Gehäuse 20 eingesetzt werden soll. Die Mittelebene P durchläuft demnach einen Raum 23, in dem sich der jeweilige Rotor 4 oder 21 dreht.

Wie Fig. 2 zeigt, ist dieser Rotorraum 23 radial außen von einer schrägen Kanalwand 24 begrenzt. Diese schräge Kanalwand 24 ergibt sich dadurch, daß der Zufuhrkanal 9/11 deutlich von der Ebene P axial versetzt ist. Daher erfolgt die Zufuhr des jeweiligen Gases nicht über den Zufuhrkanal 9/11 direkt, sondern über einen schrägen Kanalast 25, der Gas vom Zufuhrkanal 9/11 in den Rotorraum 23 leitet. Wenn nun der jeweilige Rotor in seinem Rotorraum 23 rotiert und dabei auf Grund der Fliehkraftbelastung bersten sollte, so fliegen seine Stücke bezogen auf die Achse R' radial auswärts und treffen dabei zunächst auf die Schrägwand 24, die mit der Mittelebene P des Rotors einen Winkel α und einen komplementären Winkel β mit der der Rotationsachse R entsprechenden Längsachse R' ein. Dieser letztere Winkel soll bevorzugt wenigstens 45° betragen, zweckmäßig wenigstens 60°. Damit vernichtet die Schrägwand 24 einen Teil der Prallenergie eines geborstenen Rotorstückes, ohne dabei selbst übermäßiger Belastung ausgesetzt zu sein, denn der Aufprall wird ja in Richtung zum Zufuhrkanal 9/11 abgefälscht. Damit verlängert sich aber auch die Strecke der Flugbahn, wodurch weitere Prallenergie verloren geht. Wenn dann schließlich ein geborstener Teil die Innenwand des Zufuhrkanales trifft, ist die Restenergie bereits derartig klein, daß eine Beschädigung der Gehäusewand nicht mehr möglich ist. Deshalb kann das Gehäuse 20 im Vergleich zu herkömmlichen Gehäusen relativ dünnwandig - und damit auch kostengünstiger - ausgeführt sein.

Bezieht man das eben zur Fig. 2 Gesagte auf die aus Fig. 1 ersichtliche Anordnung, so sind dort natürlich zwei Rotorräume (einer für den Rotor 4, einer für den Rotor 21) axial gegeneinander versetzt, wobei den Rotoren 4, 21 jeweils ein eigener Rotorraum zugeordnet ist, der dem Rotorraum 23 der Fig. 2 entspricht.

Im Rahmen der Erfindung sind zahlreiche Ausgestaltungen möglich; so ist aus Fig. 2 ersichtlich, daß der Zufuhrkanal 9/11 gegen den Gehäusemittelteil 6 hin versetzt ist, wie dies bevorzugt ist. Es wäre jedoch auch möglich, daß der Zufuhrkanal 9/11 gegen den Axialstutzen 13 hin versetzt wird. Theoretisch wäre es sogar denkbar, den verbindenden Kanalast 25 im Zick-Zack zu führen, so daß auswärts fliegende Rotorstücke mehrfach gegen Schrägflächen prallen und so ihre Energie noch mehr absorbiert wird.

## Patentansprüche

1. Turbolader (1), der folgendes aufweist:
eine Rotorwelle (5), die eine Rotationsachse (R; R') definiert,
ein Turbinengehäuse (2; 20) mit mindestens einem Zufuhrkanal (9) für Abgas, in welches ein Ende der Rotorwelle (5) ragt, und in welchem
mindestens ein Turbinenrotor (4) an dieser Rotorwelle (5) befestigt und so in einer vorbestimmten ersten, zur Rotationsachse (R, R') senkrechten Ebene (P) innerhalb eines ersten Rotorraumes (23) drehbar gelagert ist und dessen Peripherie das Abgas zuführbar ist,
ein Kompressorgehäuse (3) mit mindestens einem Zufuhrkanal (11) für Luft, in welches das andere Ende der Rotorwelle (5) ragt, an dem
wenigstens ein Kompressorrotor (21) in einer vorbestimmten zweiten, zur Rotationsachse (R; R') senkrechten Ebene (P) innerhalb eines zweiten Rotorraumes (23) befestigt ist und dessen Peripherie die Luft zuführbar ist,
**dadurch gekennzeichnet, daß**
mindestens einer der Zufuhrkanäle (9, 11) gegenüber der jeweiligen den zugehörigen Rotor (4, 21) enthaltenden Ebene (P) derart axial versetzt angeordnet ist, und wenigstens einen zum Rotorraum (23) führenden Kanalast (25) aufweist, dessen radial äußere Kanalwand (24) vom Rotorraum (23) zum Zufuhrkanal (9, 11) schräg überleitet und die den Motorraum (23) radial aussen begrenzt.

2. Turbolader (1) nach Anspruch 1, **dadurch gekennzeichnet, daß** es wenigstens der Zufuhrkanal (9) für Abgas ist, welcher die schräge Kanalwand (24) aufweist.

3. Turbolader (1) nach Anspruch 1 oder 2, **dadurch gekennzeichnet, daß** die schräge Kanalwand (24) zur Rotationsachse (R') einen Winkel (β) von mindestens 45° einnimmt.

4. Turbolader (1) nach Anspruch 3, **dadurch gekennzeichnet, daß** die schräge Kanalwand (24) zur Rotationsachse (R') einen Winkel (β) von mindestens 60° einnimmt.

5. Turbolader (1) nach einem der vorhergehenden Ansprüche, **dadurch gekennzeichnet, daß** der jeweilige Zufuhrkanal (9, 11) gegen den Mittelteil (6) des gesamten Gehäuses (2, 3, 6) versetzt ist.

6. Rotorgehäuse (20) für einen Turbolader (1) nach einem der vorhergehenden Ansprüche, mit einem Raum (23) zur Aufnahme eines Rotors (4, 21) koaxial zu seiner Längsachse (R'), welcher Raum (23) in einer zur Längsachse (R') senkrechten Ebene (P) liegt, im Bereich welcher Ebene (P) auch rund um den Raum (23) zur Aufnahme eines Rotors (4, 21) ein Zufuhrkanal (9, 11) für ein Gas vorgesehen ist **dadurch gekennzeichnet, daß** der Zufuhrkanal (9/11) gegenüber der jeweiligen Ebene (P) des zugehörigen Rotors (4, 21) axial versetzt ist und wenigstens einen zum Rotorraum (23) führenden Kanalast (25) aufweist, dessen radial äußere Kanalwand (24) vom Rotorraum (23) zum Zufuhrkanal (9) schräg überleitet.

7. Rotorgehäuse (20) nach Anspruch 6, **dadurch gekennzeichnet, daß** die schräge Kanalwand (24) zur Längsachse (R') einen Winkel (β) von mindestens 45° einnimmt.

8. Rotorgehäuse (20) nach Anspruch 7, **dadurch gekennzeichnet, daß** die schräge Kanalwand (24) zur Längsachse (R') einen Winkel (β) von mindestens 60° einnimmt.

9. Rotorgehäuse (20) nach einem der Ansprüche 5 bis 8, **dadurch gekennzeichnet, daß** der jeweilige Zufuhrkanal (9/11) gegen den Mittelteil (6) des gesamten Gehäuses (2, 3, 6) versetzt ist.

## Claims

1. A turbocharger (1) comprising
a rotor shaft (5) defining an axis of rotation (R, R'),
a turbine housing (2;20) including at least one gas supply channel (9) for supplying exhaust gas, housing into which extends one end of said rotor shaft (5), and in which
at least one turbine rotor (4) is rotatingly supported within a first rotor space (23) and in a predetermined first plane (P), which is perpendicular to the axis of rotation (R, R'), said rotor being mounted on said rotor shaft (5), said exhaust gas being supplied to the periphery of said turbine rotor ;
a compressor housing (3) having at least one admission channel (11) for air, housing into which extends said second end of said rotor shaft (5),
at least one compressor rotor (21) which is mounted on said shaft (5) in a predetermined second plane (P) perpendicular to said axis of rotation (R, R') and within a second rotor space (23), air being supplied to its periphery,
**characterized in that** at least one of said admission channels (9, 11) is axially offset with respect to the plane (P) of the respective rotor (4, 21) and comprises at least one channel section (25) leading to the rotor space (23), the radially outer wall (24) of which is leading, in inclined fashion, from the rotor space (23) to the admission channel (9, 11) and limits the rotor space (23) radially outwardly.

2. Turbocharger (1) as claimed in claim 1, **characterized in that** at least said gas supply channel (9) is axially offset and comprises said inclined channel section (24).

3. Turbocharger (1) as claimed in claim 1, **characterized in that** said inclined channel wall (24) forms an angle (β) of at least 45° to said axis of rotation (R').

4. Turbocharger (1) as claimed in claim 3, **characterized in that** said inclined channel wall (24) is inclined at an angle (β) of at least 60° to said axis of rotation (R').

5. Turbocharger (1) as claimed in anyone of the preceding claims, **characterized in that** each respective one of said admission channels (9, 11) is offset from a center portion (6) of the entire housing (2, 3, 6).

6. A rotor housing (20) for a turbocharger (1) according to any one of the preceding claims, having a space (23) for lodging a rotor (4, 21) coaxially with its longitudinal axis (R'), which space (23) is arranged in a plane (P) perpendicular to the longitudinal axis (R'), close to which plane (P) is also provided an admission channel (9, 11) for gas, around the space (23) for lodging a rotor (4, 21),
**characterized in that** the admission channel (9, 11) is axially offset from the plane (P) of the respective rotor (4, 21) and comprises at least one channel section (25) which leads to the rotor space (23), the radially outer wall (24) of which leads, in inclined fashion, from the rotor space (23) to the admission channel (9).

7. Rotor housing (20) as claimed in claim 6, **characterized in that** said inclined channel wall (24) is inclined at an angle (β) of at least 45° to said longitudinal axis (R').

8. Rotor housing (20) as claimed in claim 7, wherein said inclined channel wall (24) is inclined at an angle (β) of at least 60° to said longitudinal axis (R').

9. Rotor housing (20) as claimed in one of claims 5-8, charaterized in that each respective one of said admission channels (9, 11) is offset from a center portion (6) of the entire housing (2, 3, 6).

## Revendications

1. Turbosoufflante (1) comportant un arbre de rotation (5) définissant un axe de rotation (R, R'), un logement de turbine (2; 20) comportant au moins un canal d'amenée de gaz (9) pour amener des gaz d'échappement, canal dans lequel s'étend une première extrémité dudit arbre de rotation (5), et dans lequel au moins un rotor de turbine (4) est supporté de façon rotative à l'intérieur d'un premier espace de rotor (23), dans un premier plan (P) prédéterminé, qui est perpendiculaire à l'axe de rotation (R, R') et qui est monté sur ledit arbre de rotation (5), ledit gaz d'échappement étant amené à la périphérie dudit rotor de turbine;
un logement de compresseur (3) ayant au moins un canal d'admission d'air (11) dans lequel s'étend la seconde extrémité dudit arbre de rotation (5),
au moins un rotor compresseur (21), monté sur ledit arbre (5) dans un second plan (P) prédéterminé, perpendiculaire audit axe de rotation (R, R'), à l'intérieur d'un second espace de rotor (23), de l'air étant amené à sa périphérie,
**caractérisé en ce qu'**au moins un desdits canaux d'admission (9, 11) est axialement décalé par rapport au plan (P) du rotor respectif (4, 21) et comportant au moins une partie (25) amenant à l'espace de rotor (23), dont la paroi radialement extérieure (24) amène, de façon inclinée, à partir de l'espace de rotor (23) dans le canal d'admission (9, 11) et limite l'espace de rotor radialement vers l'extérieur.

2. Turbosoufflante (1) selon la revendication 1, caractériseé en ce qu'au moins ledit canal d'amenée (9), qui est axialement décalé, comporte une section de canal (24) inclinée.

3. Turbosoufflante (1) selon la revendication 1, **caractérisée en ce que** ladite paroi de canal (24) inclinée forme un angle (β) d'au moins 45° avec l'axe de rotation (R').

4. Turbosoufflante (1) selon la revendication 3, **caractérisée en ce que** ladite paroi de canal inclinée (24) est inclinée à un angle (β) d'au moins 60° par rapport à l'axe de rotation ®'.

5. Turbosoufflante (1) selon l'une quelconque des revendications précédentes, **caractérisée en ce que** chacun desdits canaux d'admission (9, 11) est décalé par rapport à une partie centrale (6) du logement complet (2,3,6).

6. Logement de rotor (20) pour une turbosoufflante selon l'une quelconque des revendications précédentes comportant un espace pour loger un rotor (4, 21) de façon coaxiale avec son axe longitudinal (R'), espace (23) qui est situé dans un plan (P) perpendiculaire à l'axe longitudinal (R'), plan (P) près duquel est prévu un canal d'admission (9, 11) pour du gaz, autour de l'espace (23) pour loger le rotor (4, 21),
**caractérisé en ce que** le canal d'admission (9, 11) est axialement décalé par rapport au plan (P) du rotor respectif (4, 21) et comporte au moins une partie (25) qui mène à l'espace de rotor (23), dont la paroi radialement extérieure (24) amène, de façon inclinée, à partir de l'espace de rotor (23) au canal d'admission (9).

7. Logement de rotor (20) selon la revendication 6,
**caractérisé en ce que** la paroi inclinée (24) est inclinée à un angle (β) d'au moins 45° par rapport à l'axe longitudinal (R').

8. Logement de rotor (20) selon la revendication 7, dans lequel la paroi inclinée (24) est inclinée à un angle (β) d'au moins 60° par rapport à l'axe longitudinal (R').

9. Logement de rotor (20) selon l'une des revendications 5 à 8, **caractérisé en ce que** chacun desdits canaux d'admission (9, 11) est décalé par rapport à une partie centrale (6) du logement complet (2, 3, 6).
